# EUROPÄISCHE PATENTSCHRIFT

(11) **EP 1 125 807 B1**
(45) Veröffentlichungstag und Bekanntmachung des Hinweises auf die Patenterteilung: **17.02.2010**
(21) Anmeldenummer: 00127885.2
(22) Anmeldetag: 20.12.2000
(51) Int. Cl.: B60S 1/48, B60S 1/60

(54) **Streuscheibenreinigungsanlage**
Cleaning device for lamp glasses
Dispositif de lavage de glaces de phare

(30) Priorität: 18.02.2000 DE 10007517
(43) Veröffentlichungstag der Anmeldung: 22.08.2001
(73) Patentinhaber: Continental Automotive GmbH, 30165 Hannover (DE)
(72) Erfinder: Petzold, Sven, 65191 Wiesbaden (DE)

(56) Entgegenhaltungen:
- EP-A- 0 820 911
- DE-A- 4 141 507
- DE-A- 19 800 013
- DE-A1- 4 427 171

## Beschreibung

Gegenstand der Erfindung ist eine Streuscheibenreinigungsanlage für ein Kraftfahrzeug gemäß dem Oberbegriff des Anspruchs 1.

Aus der DE 41 41 507 A1 ist eine derartige Strenscheibenreinigungsanlage bekannt. Streuscheibenreinigungsanlagen, die mittels einer Pumpe die Reinigungsflüssigkeit aus einem Waschwasserbehälter über Schlauchleitungen zu den im Bereich der Streuscheiben eines Kraftfahrzeugs angeordneten Waschdüsen fördern, sind seit langem bekannt und somit Stand der Technik. Bei den vorhandenen Streuscheibenreinigungsanlagen sind mehrere Arten der Reinigung bekannt. Während bei einigen Streuscheibenreinigungsanlagen bei jeder Betätigung eines Bedienelementes der Fahrer genau einen Waschvorgang auslöst, wird bei anderen Streuscheibenreinigungsanlagen mit jeder Betätigung des Bedienelementes eine Intensivreinigung gestartet, die in der Regel aus zwei Waschvorgängen besteht, die durch eine Pause unterbrochen sind. Der Nachteil dieser Streuscheibenreinigungsanlagen besteht darin, daß im ersten Fall infolge der reduzierten Flüssigkeitsmenge bei stark verschmutzten Streuscheiben ein Waschvorgang nicht ausreichend ist, der Fahrer jedoch keine Informationen über den Verschmutzungsgrad der Streuscheiben erhält. Dadurch ist die Gefahr sehr groß, daß die Streuscheiben entweder ungenügend gereinigt sind oder der Verbrauch an Waschflüssigkeit infolge des mehrmaligen Betätigen durch den Fahrer sehr hoch ist, ohne das die Reinigung der Streuscheiben spürbar verbessert wird. Infolgedessen verkürzt sich die Zeit bis zum Wiederauffüllen des Waschwasserbehälters. Der Nachteil der permanenten Intensivreinigung bei jedem Betätigen des Bedienelementes ist ebenfalls der hohe Verbrauch an Waschflüssigkeit, wodurch auch in diesem Fall der Behälter bereits nach relativ kurzer Zeit wieder aufgefüllt werden muß.

Desweiteren sind Streuscheibenreinigungsanlagen mit einer automatischen Reinigung bekannt, bei denen die Reinigungen der Streuscheiben mit der der Windschutzscheibe gekoppelt ist. Über eine Steuereinheit wird bspw. nach jeder zehnten Reinigung der Windschutzscheibe eine Reinigung der Streuscheiben mit einer reduzierten Flüssigkeitsmenge durchgeführt. Um den Waschwasserverbrauch nicht noch weiter zu erhöhen, ist diese automatische Reinigung nur dann aktiv, wenn die Scheinwerfer des Kraftfahrzeugs in Betrieb sind. Auf diese Weise wird ein annähernd gleichbleibender Reinigungsgrad erhalten, der infolge des Fehlens einer Intensivreinigung nicht optimal ist. Insbesondere dann, wenn das Fahrzeug ohne Licht und unter widrigen Witterungsverhältnissen, die zu einer starken Verschmutzung der Streuscheiben führen, bewegt wird. In diesem Fall ist die Lichtausbeute beim Gebrauch der Scheinwerfer ungenügend, und kann unter Umständen zu verkehrsgefährdenden Situationen für den Fahrer oder anderer Verkehrsteilnehmer führen. Dieser Nachteil wirkt umso schwerer, da infolge der Entlastung des Fahrers von der Streuscheibenreinigung er der Meinung sein könnte, optimal gereinigte Scheinwerfer vorzufinden, ihm jedoch alle Möglichkeiten genommen sind, die Reinigung der Streuscheiben zu verbessern.

Der Erfindung liegt daher die Aufgabe zugrunde, eine Streuscheibenreinigungsanlage zu schaffen, die eine den gesetzlich vorgeschriebenen Anforderungen genügende Reinigungswirkung bei minimalem Verbrauch an Reinigungsflüssigkeit besitzt.

Gelöst wird die Aufgabe mit den Merkmalen des Anspruchs 1. Vorteilhafte Ausgestaltungen sind in den Unteransprüchen beschrieben.

Die erfindungsgemäße Vorrichtung besteht aus einem Waschwasserbehälter, einer Pumpe, die die Reinigungsflüssigkeit über Schlauchleitungen zu den Waschdüsen im Bereich der Streuscheiben fördert und einer Steuereinheit, die sowohl eine manuell ausgelöste Reinigung als auch eine automatische Reinigung der Streuscheiben erlaubt. Erfindungswesentlich dabei ist, daß die Streuscheibenreinigungsanlage die Vorteile der automatischen Erhaltungsreinigung nutzt, welche sich durch einen geringen Verbrauch an Waschflüssigkeit auszeichnet. Gleichzeitig kann der Fahrer aber jederzeit eine Intensivreinigung veranlassen. Der entscheidende Vorteil besteht darin, daß damit eine Streuscheibenreinigungsanlage geschaffen wurde, die unter allen möglichen Fahrsituationen eine optimale Reinigung der Streuscheiben gewährleistet. So kann der Fahrer zu Beginn des Fahrtantritts oder mit Einschalten der Scheinwerfer eine Intensivreinigung durchführen und anschließend im weiteren Fahrverlauf die automatische Erhaltungsreinigung nutzen und so mit ausreichend gereinigten Scheinwerfern einerseits Waschflüssigkeit sparen und sich gleichzeitig von der Streuscheibenreinigung entlasten. Dabei bleibt er dennoch in der Lage, jederzeit eine Reinigung durchzuführen, um so auf sich plötzlich verschlechternde Verkehrsverhältnisse reagieren zu können.

In einer vorteilhaften Ausgestaltung wird im automatischen Modus die Erhaltungsreinigung benutzt, bei der die Anzahl der Sprühvorgänge der Scheibenwaschdüsen an der Windschutzscheibe ein Zählwerk in der Steuereinheit erfasst. Nach einer vorgegebenen Anzahl wird anschließend eine Streuscheibenreinigung durchgeführt. Erfindungsgemäß wird über einen weiteren Eingang an der Steuereinheit die Funktion "Licht an" erfasst, so daß nur bei einem Anliegen eines entsprechenden Signals das Zählwerk aktiviert wird.

Im manuellen Modus wird vorteilhafterweise die Intensivreinigung benutzt, wobei eine weitere Ausgestaltung darin besteht, daß über das Bedienelement weiterer Waschprogramme in der Steuereinheit auswählbar sind. Ebenso kann die Steuereinheit mit mehreren Bedienelementen verbunden sein. Ein besonders niedriger Verbrauch an Waschflüssigkeit wird erreicht, wenn der automatische Modus vom manuellen Modus abhängig ist. So kann nach einer manuellen Betätigung des Bedienelementes mit der damit verbundenen Streuscheibenreinigung, die Anzahl der bisher vom Zählwerk ermittelten Sprühvorgänge an der Windschutzscheibe auf 0 gesetzt werden und der Zählzyklus beginnt von Neuem.

Weiterhin ist es vorteilhaft, über die Steuereinheit nicht nur die Pumpe sondern auch Zusatzvorrichtungen, z. B. elektromotorisch angetriebene Hubdüsen anzusteuern.

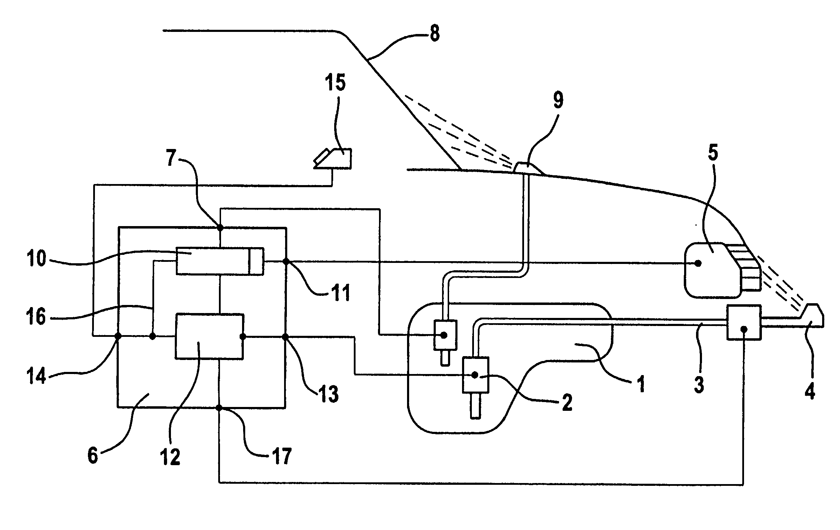

An einem Ausführungsbeispiel wird die Erfindung näher erläutert, wobei die Erfindung nicht auf dieses Beispiel beschränkt ist. Dabei zeigt die einzige Figur ein Schema der erfindungsgemäßen Streuscheibenreinigungsanlage.

Die Streuscheibenreinigungsanlage besteht aus einem Waschflüssigkeitsbehälter 1, einer daran angeordneten Pumpe 2, die die Waschflüssigkeit über einen Schlauch 3 zu einer Hubdüse 4 fördert. Die Hubdüse 4 ist im Bereich der Streuscheibe 5 eines Scheinwerfers angeordnet. Weiterhin umfaßt die Streuscheibenreinigungsanlage eine Steuereinheit 6. Die Steuereinheit 6 besitzt einen Eingang 7, über den die Anzahl der Sprühvorgänge der an der Windschutzscheibe 8 angeordneten Scheibenwaschdüsen 9 einem Zählwerk 10 zugeführt werden. Über den mit dem Scheinwerfer in Verbindung stehenden Eingang 11 wird das Zählwerk 10 aktiviert. Nach dem Erreichen einer vorgegebenen Anzahl wird über die Zentraleinheit 12 der Steuereinheit 6 die Pumpe 2 angesteuert, die über den Ausgang 13 mit der Steuereinheit 6 verbunden ist. Die Zentraleinheit 12 ist weiterhin über einen Eingang 14 mit einem manuell zu betätigenden Bedienelement 15 verbunden, über das ebenfalls ein in der Zentraleinheit 12 gespeichertes Waschprogramm ausgelöst wird. Mittels einer Leitung 16 ist das Zählwerk 10 durch das Bedienelement 15 beeinflussbar. Neben der Pumpe 2 wird die Hubdüse 4 über den Ausgang 17 ebenfalls von der Steuereinheit 6 angesteuert.

## Patentansprüche

1. Streuscheibenreinigungsanlage für ein Kraftfahrzeug, bestehend aus einem Waschwasserbehälter (1), einer Pumpe (2) zum Fördern der Waschflüssigkeit aus dem Waschwasserbehälter (1) über Schlauchleitungen zu Waschdüsen, die im Bereich der Streuscheiben (5) des Kraftfahrzeuges angeordnet sind, wobei die Streuscheibenreinigungsanlage eine Steuereinheit (6) besitzt, die mit der Pumpe (2) verbunden und zum Ansteuern der Pumpe (2) mit unterschiedlichen oder gleichen Waschprogrammen ausgebildet ist und die Steuereinheit (6) über mindestens einen Eingang (14) mit mindestens einem manuell betätigbaren Bedienelement (15) verbunden ist, über das mindestens ein Waschprogramm in der Steuereinheit (6) auswählbar ist, wobei die Steuereinheit (6) ein Zählwerk (10) besitzt, welches mit einem Eingang (7) verbunden ist, über den die Betätigungen der Waschdüsen (9) der Windschutzscheibe (8) erfassbar sind **dadurch gekennzeichnet, dass** das Zählwerk (10) einen Eingang (11) zum Zuleiten des Signals "Licht an" aufweist, sodass nur bei einem Anliegen eines entsprechenden Signals das Zählwerk (10) aktiviert wird.

2. Streuscheibenreinigungsanlage nach Anspruch 1, **dadurch gekennzeichnet, dass** die Steuereinheit (6) derart ausgebildet ist, dass der Ausgang (13) zur Pumpe (2) unabhängig oder abhängig von der Auswahl der Waschprogramme über das Bedienelement (15) oder das Zählwerk (10) ansteuerbar ist.

3. Streuscheibenreinigungsanlage nach Anspruch 1 oder 2, **dadurch gekennzeichnet, dass** die Steuereinheit (6) weitere Ausgänge (17) besitzt, die mit weiteren Vorrichtungen, vorzugsweise elektromotorischen Hubdüsen (4) verbunden sind.

## Claims

1. Lamp glass cleaning system for a motor vehicle, comprising a washing water tank (1), a pump (2) for delivering the washing liquid from the washing water tank (1) via hose lines to washing nozzles which are arranged in the region of the lamp glasses (5) of the motor vehicle, wherein the lamp glass cleaning system has a control unit (6) which is connected to the pump (2) and is designed for activating the pump (2) with different or identical washing programs, and the control unit (6) is connected via at least one input (14) to at least one manually actuable operating element (15) via which at least one washing program can be selected in the control unit (6), wherein the control unit (6) has a counter (10) which is connected to an input (7) via which the actuations of the washing nozzles (9) of the windscreen (8) can be detected, **characterized in that** the counter (10) has an input (11) for the passing in of the "light on" signal such that the counter (10) is activated only when a corresponding signal is present.

2. Lamp glass cleaning system according to Claim 1, **characterized in that** the control unit (6) is designed in such a manner that the output (13) to the pump (2) is activatable via the operating element (15) or the counter (10) irrespective of or as a function of the selection of the washing programs.

3. Lamp glass cleaning system according to Claim 1 or 2, **characterized in that** the control unit (6) has further outputs (17) which are connected to further devices, preferably to electromotive lifting nozzles (4).

## Revendications

1. Lave-glaces pour glaces de phares sur un véhicule automobile, comprenant un récipient (1) de liquide de lavage, une pompe (2) pour le transfert du liquide de lavage à partir du récipient (1) de liquide de lavage, par l'intermédiaire de tuyaux souples, vers des gicleurs de lavage, lesquels sont disposés à proximité des glaces de phares (5) du véhicule automobile, où le lave-glaces pour glaces de phares a une unité de commande (6), laquelle est reliée à la pompe (2) et, pour commander la pompe (2), est configurée avec des programmes différents de lavage ou avec les mêmes programmes de lavage et où l'unité de commande (6) est reliée, par l'intermédiaire de au moins une entrée (14) à au moins un organe de commande (15) pouvant être actionné manuellement et par l'intermédiaire duquel il est possible de sélectionner au moins un programme de lavage dans l'unité de commande (6), où l'unité de commande (6) renferme un compteur (10), qui est relié à une entrée (7) et par l'intermédiaire duquel il est possible de détecter le nombre de manoeuvres des gicleurs de lavage (9) du pare-brise (8), **caractérisé par le fait que** le compteur (10) comporte une entrée (11) pour lui appliquer le signal "Phares allumés", si bien que le compteur (10) n'est actif que spi ledit signal correspondant lui est appliqué.

2. Lave-glaces pour glaces due phares selon à revendication 1, **caractérisé par le fait que** l'unité de commande (6) est conçue de manière telle que la sortie (13) vers la pompe (2) peut être commandée par l'intermédiaire de l'organe de commande (15) ou du compteur (10) indépendamment ou en fonction de la sélection des programmes de lavage.

3. Lave-glaces pour glaces de phares selon la revendication 1 ou 2, **caractérisé par le fait que** l'unité de commande (6) a d'autres sorties (17) qui sont reliées à d'autres dispositifs, d'une façon préférentielle à des gicleurs escamotables (4) commandés par moteur électrique.
